# EUROPEAN PATENT SPECIFICATION

(11) **EP 4 091 910 B1**
(45) Date of publication and mention of the grant of the patent: **19.03.2025**
(21) Application number: 22174271.1
(22) Date of filing: 19.05.2022
(51) Int. Cl.: B62D 15/02, B60W 30/06, G08G 1/16

(54) **LEARNING METHOD AND APPARATUS FOR PARKING FUNCTION IN AUTONOMOUS DRIVING**
LERNVERFAHREN UND -VORRICHTUNG FÜR DIE EINPARKFUNKTION BEIM AUTONOMEN FAHREN
PROCÉDÉ ET APPAREIL D'APPRENTISSAGE POUR UNE FONCTION DE STATIONNEMENT EN CONDUITE AUTONOME

(30) Priority: 19.05.2021 CN 202110547543
(43) Date of publication of application: 23.11.2022
(73) Proprietor: Guangzhou Xiaopeng Motors Technology Co., Ltd., Tianhe District Guangzhou Guangdong (CN)
(72) Inventor: RAO, Heng, Guangzhou (CN); DAI, Guanqi, Guangzhou (CN); YAN, Zhenjie, Guangzhou (CN); SUN, Hongxiao, Guangzhou (CN); HU, Zhimiao, Guangzhou (CN); LI, Liangyi, Guangzhou (CN); JIAN, Jia, Guangzhou (CN); JIANG, Jialiang, Guangzhou (CN)
(74) Representative: Ran, Handong

(56) References cited:
- DE-A1- 102016 100 235
- DE-A1- 102018 100 289
- DE-A1- 102019 115 712
- US-A1- 2017 253 237
- US-A1- 2019 184 981

## Description

### Field of Invention

The present invention relates to the field of autonomous driving technologies, and in particular, to a learning method and apparatus for a parking function in autonomous driving.

### Background

In the field of autonomous driving technologies, automatic parking is usually involved. Automatic parking requires a user to drive a vehicle to the vicinity of an available parking space. Only when the available parking space is detected, the vehicle can be automatically parked in the available parking space. Such an approach has certain limitations.

DE 102018100289 A1 relates to a method for operating a parking assistance device of a motor vehicle, with a) learning of a parking trajectory with a starting position and a parking position by a control unit of the parking assistance device; a b) displaying a visual representation of an environment of the motor vehicle by a display unit of the parking assistance device; and a c) superimposing a visual representation of the learned parking trajectory with starting position and parking position with the displayed representation of the environment on the display unit to a driver or to provide a user of the motor vehicle with an overview of an automated parking process.

US 2019/184981 A1, which corresponds to the preamble of claim 1, relates to a method for assisted parking of a vehicle performed by a parking control device. The method includes: determining a current position of a vehicle based on at least one of GPS information or environment information of the vehicle; generating traveling map information during manual driving of the vehicle, the traveling map information including a traveling path of the vehicle from the current position of the vehicle, based on at least one user input received through a vehicle manipulation device and at least one sensor value acquired through at least one sensor; and transmitting, based on receiving a rollback request signal, a rollback control signal that causes the vehicle to autonomously drive in a reverse direction along at least part of the traveling path from a rollback starting position of the vehicle.

DE 102019115712 A1 relates to a method for providing a parking trajectory for an improved autonomous parking maneuver, which is carried out using a driving support system of a vehicle, the driving support system having at least one environmental sensor for monitoring a Environment of the vehicle, the method comprising the steps of recording a travel trajectory of the vehicle while the vehicle is being driven from a starting position to a parking position, Monitoring the surroundings of the vehicle based on sensor information provided by the at least one surroundings sensor, extracting the travel trajectory from the starting position to the parking position as determined by the vehicle is driven, together with environmental information regarding the driving trajectory, execution of a trajectory optimization to calculate at least one optimized trajectory based on the driving trajectory and the sensor information covering the environment of the vehicle, and requesting a user input via a user interface for selecting a trajectory from the at least one optimized trajectory and the driving trajectory as a parking trajectory.

DE 102016100235 A1 relates to a method for recurrent parking of a vehicle in a parking region, in which environment information of the parking region is detected with a detection device of the vehicle during a first parking in the parking region, wherein the environment information is displayed on a display unit during the first parking, wherein a vehicle user selects, from the displayed environment information, at least one object from a first object category as the environment information characterising the parking region and/or selects, from the displayed environment information, at least one object from a second object category which is different to the first as environment information characterising the parking region, wherein the selected objects are saved and, for recurrent parking, a currently detected parking region is identified as the parking region during the first parking according to selected and saved objects.

### Summary of Invention

In view of the problems above, a learning method and apparatus for a parking function in autonomous driving are proposed to overcome or at least partially solve the above problems.

A learning method for a parking function in autonomous driving is as set out in claim 1.

Optionally, said learning, in the parking process of the current vehicle from the designated location in the parking lot to the target parking space, the parking path and the surrounding information acquired in the parking process, and presenting at least part of the surrounding information on the parking function learning interface to provide a view of the surrounding environment to the user, includes:
when a fixedly-arranged object is detected, recording information of the fixedly-arranged object, and presenting a simulation element for the fixedly-arranged object on the parking function learning interface, so as to provide a view of the fixedly-arranged object in the environment to the user;
when a temporarily-arranged object is detected, recording information of the temporarily-arranged object, and presenting a simulation element for the temporarily-arranged object on the parking function learning interface, so as to provide a view of the temporarily-arranged object in the environment to the user; and/or
when a dynamic object is detected, presenting a simulation element for the dynamic object on the parking function learning interface, so as to provide a view of the dynamic object in the environment to the user, wherein no information of the dynamic object is recorded.

Optionally, said outputting the current learning progress and the current learning result to the user in the learning process for the parking function, includes:
presenting, in the learning process for the parking function learning, visual content containing information about a current learning node on the parking function learning interface, so as to show the current learning progress to the user; and
presenting, in the learning process for the parking function, visual content containing currently learned key information on the parking function learning interface, so as to show the current learning result to the user.

Optionally, the method further includes:
presenting, on the parking function learning interface, an interface element for ending the learning for the parking function; and
presenting, in response to an operation on the interface element for ending the learning for the parking function, visual content containing information indicating the user to confirm whether the current vehicle has been parked into the target parking space, so as to provide the user with information that the current vehicle needs to be parked into the target parking space.

Optionally, the method further includes:
presenting, on the parking function learning interface, a perception enhancement element for identifying a learning starting point, so as to show information of the learning starting point to the user.

Optionally, the method further includes:
presenting, on the parking function learning interface, a perception enhancement element for performing view blocking on an or the object or objects, so as to provide the user with information indicating a relative distance from the object or objects to the current vehicle.

A learning apparatus for a parking function in autonomous driving is as set out in claim 7.

A vehicle includes a processor, a memory and a computer program stored on the memory and executable by the processor that, wherein when executed by the processor, implements the learning method for a parking function in autonomous driving described above.

A computer readable storage medium is provided, wherein the computer readable storage medium has stored thereon a computer program that, when executed by a processor, implements the learning method for a parking function in autonomous driving described above.

The embodiments of the present invention have the following advantages:
In the embodiments of the present invention, in a parking process of a current vehicle from a designated location in a parking lot to a target parking space, a parking path and surrounding information acquired in the parking process are learned, and at least part of the surrounding information is presented, to provide a view of surrounding environment to a user. Current learning progress and a learning result(s) are output to the user in the learning process for the parking function. Therefore, in the learning process for the parking function, the environment information is presented, and the learning progress and the learning result(s) are output, allowing the user to perceive the learning process more clearly and quickly.

### Brief Description of Drawings

To more clearly illustrate the technical solutions of the present invention, accompanying drawings used in the description of the present invention will be briefly described below. Obviously, the accompanying drawings in the following description show only some embodiments of the present invention, and a person of ordinary skills in the art can obtain other drawings based on the accompanying drawings herein without creative efforts.
Fig. 1 is a flowchart of steps of a learning method for a parking function in autonomous driving according to an embodiment of the present invention;
Fig. 2a is a flowchart of steps of another learning method for a parking function in autonomous driving according to an embodiment of the present invention;
Fig. 2b is a schematic diagram of an interactive interface according to an embodiment of the present invention;
Fig. 3a is a flowchart of steps of yet another learning method for a parking function in autonomous driving according to an embodiment of the present invention;
Fig. 3b is a schematic diagram of another interactive interface according to an embodiment of the present invention;
Fig. 3c is a schematic diagram of yet another interactive interface according to an embodiment of the present invention; and
Fig. 4 is a structural block diagram of a learning apparatus for a parking function in autonomous driving according to an embodiment of the present invention.

### Detailed Description

To make the foregoing objectives, features and advantages of the present invention more clearly understood, the present invention will be further described in detail below with reference to the accompanying drawings and specific implementations. Clearly, the embodiments described are some rather than all embodiments of the present invention. Based on the embodiments of the present invention, all other embodiments obtained by a person of ordinary skills in the art without creative efforts shall fall within the protection scope of the present invention.

In practice, in an autonomous driving process of a current vehicle in a parking lot, automatic parking can be started only when the current vehicle has detected a target parking space. However, the automatic parking cannot be started on a road from entry of the vehicle into the parking lot to detection of a target parking space, and thus the specific situation in this road cannot be determined, resulting in relatively poor safety of autonomous driving.

To improve safety of autonomous driving, a parking path for the current vehicle to travel from the entrance of the parking lot to a target parking space can be learned. The learning process may be as follows: learning of the parking path is started after the vehicle enters the parking lot and/or before a target parking space is detected. Specifically, when the current vehicle travels to a designated location, learning of the parking path may be triggered. The current vehicle is controlled to drive to an area in which a target parking space can be detected, and then is parked in the target parking space and perform memory modeling on the scenario related to the path. The learning of the parking path is then completed.

The present invention involves, after the current vehicle enters the parking lot and triggers learning for the parking function and during the learning for the parking function: display of an interactive interface on the current vehicle; learning of information representative of the current vehicle's surroundings on the parking path; and output of the learning progress and learning result during the learning for clearly and quickly viewing by a user of the learning process.

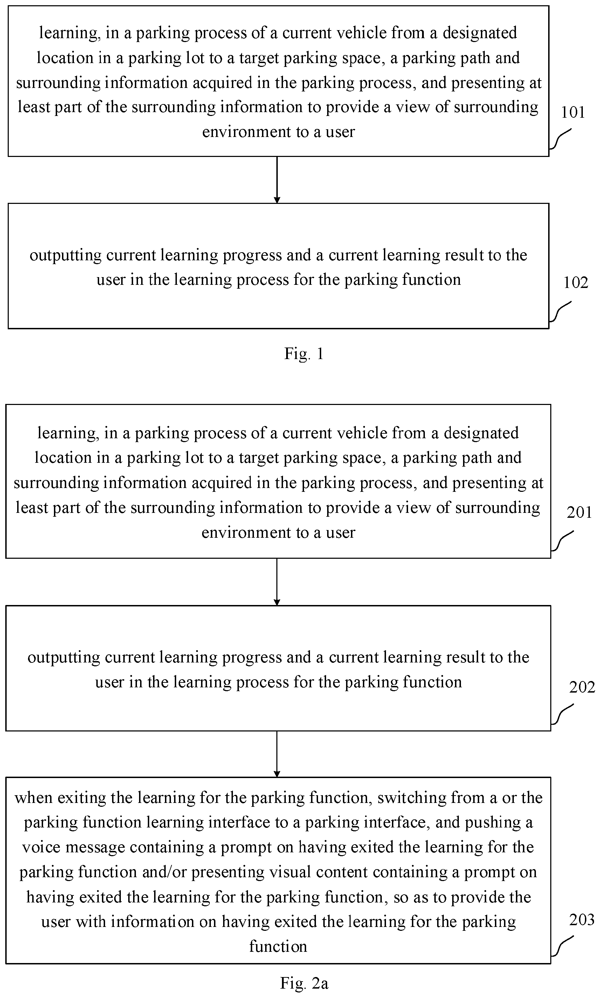

Fig. 1a is a flowchart of steps of a learning method for a parking function in autonomous driving according to an embodiment of the present invention, which may specifically include the following steps 101 to 102.

At step 101, in a parking process of a current vehicle from a designated location in a parking lot to a target parking space, a parking path and surrounding information acquired in the parking process are learned, and at least part of the surrounding information is presented to provide a view of surrounding environment to a user.

The parking path may be a driving path from the designated location to the target parking space in the parking lot (a parking lot in an enclosed space, such as an underground parking garage). The designated location may be a location at which the learning for the parking function is triggered, i.e., the start of the parking path. The designated location may be within a preset distance from the target parking space, such as within 1 km. The target parking space may be a parking space into which the vehicle will be finally parked in the learning process for the parking function, for example, the user's usual parking space.

The current vehicle triggers the learning for the parking function in the parking lot. **In** the process of parking from the designated location in the parking lot to the target parking space, the parking path and the surrounding information acquired in the parking process may be learned, and at least part of the acquired information indicative of the surroundings may be presented in a parking learning interface, so as to provide the user with information on the surroundings of the current vehicle.

Specifically, during the travelling of the current vehicle, the current vehicle may acquire surrounding information within a certain range around the current vehicle through a sensor(s) (such as a laser radar or a camera), and may perform different operations on different objects based on the acquired surrounding information.

The objects may include a fixedly-arranged object(s) (such as a parking space, a post, a wall, or a speed bump) fixedly arranged in the environment, a temporarily-arranged object(s) (such as a vehicle parked in a parking space, a roadblock, or a parked bicycle) temporarily placed in the environment, or a dynamic object(s) dynamically presented in the environment (such as a vehicle that the current vehicle encountered oppositely side-by-side on the parking path during the learning).

In an embodiment of the present invention, step 101 may include the following steps 111 to 113.

At step 111, when a fixedly-arranged object is detected, information of the fixedly-arranged object is recorded, and a simulation element for the fixedly-arranged object is presented on the parking function learning interface, so as to provide a view of the fixedly-arranged object in the environment to the user.

In the learning for the parking function, when a fixedly-arranged object in the environment is detected, the object is resident information that can be directly used in path calculation in a subsequent process of Valet Parking Assist (VPA). Therefore, information of the object may be recorded in the parking path being learned currently.

In an example, when the fixedly-arranged object is a designated first object for limiting a vehicle speed, a voice message containing an indication that information of the first object has been recorded is pushed, so as to prompt the user of the recording of the information of the designated first object for limiting the vehicle speed.

In practice, when it is determined that the object is a designated first object for limiting a vehicle speed, a first message may be generated, which may be used to indicate that information of the first object has been recorded. The first message is pushed to the user to prompt the user that the information of the first object has been recorded. The first message may be a voice message or may be a message in the form of graphics or text shown on the interactive interface.

For example, in the learning process, a speed bump may appear on the parking path. The speed bump may be involved in a deceleration strategy in a subsequent VPA process. Therefore, a voice is played to the user informing that the speed bump has been recorded. In addition, the speed bump is drawn on a map on the display, and will be recorded on a path in the map after the learning is completed.

At step 112, when a temporarily-arranged object is detected, information of the temporarily-arranged object is recorded, and a simulation element for the temporarily-arranged object is presented on the parking function learning interface, so as to provide a view of the temporarily-arranged object in the environment to the user.

In the learning process for the parking function, when a temporarily-arranged object in the environment is detected, to ensure safety of the autonomous driving, a simulation element for the object may be displayed in the environment simulation display, and information of the object may be recorded in the parking path being learned currently.

At step 113, when a dynamic object is detected, a simulation element for the dynamic object is presented on the parking function learning interface, so as to provide a view of the dynamic object in the environment to the user, wherein no information of the dynamic object is recorded.

In the learning process for the parking function, a dynamic object may be detected by the current vehicle. When a dynamic object is detected, a simulation element for the object may be displayed on the interactive interface while the object will not be recorded in the parking path. Therefore, during path planning in a subsequent process of VPA, the object appeared in this learning process will not be taken into account. Only dynamic objects actually encountered by the vehicle in the process of VPA are considered in a dynamic path calculation.

It should be noted that, step 111, step 112 and step 113 can be performed in parallel, and are not order dependent.

When there is no knowledge of the environment of the parking path, the current vehicle performs obstacle avoidance only based on obstacles within a relatively small range detected by the current vehicle in the autonomous driving process. After the current vehicle learns and memorizes the parking path to determine the information of the entire parking path, the current vehicle can start to set up a corresponding obstacle avoidance strategy and perform path planning in the autonomous driving process even when it is relatively far away from the obstacle(s), thereby improving safety of the autonomous driving.

In an example, before step 101, the method includes:
checking a storage status of a historical parking path for the current parking lot when it is detected that a trigger condition for learning for the parking function in the current parking lot is met; and starting the learning for the parking function in different manners based on the storage status of the historical parking path.

A trigger condition for learning for the parking function may be set. The trigger condition for learning for the parking function may be that the current vehicle has entered a parking lot (for example, when GPS signals of the vehicle disappear, it can be determined that the vehicle is in an underground parking garage), or may be that the current vehicle has arrived at a designated location in the parking lot. The trigger condition may be adjusted depending on, but not limited to, requirements for different parking lots and different learning scenarios.

A historically learned parking path for the current parking lot may have been stored on the current vehicle, or no historically learned parking path is stored. When a historically learned parking path is stored, learning of a new parking path can be chosen. When no historically learned parking path exists, the learning for the parking function may be performed directly.

Specifically, when the current vehicle has stored thereon a historically learned parking path for the parking lot, learning of a new parking path can be activated through action interaction, thereby entering learning for the parking function. When the current vehicle has no historically learned parking path for the parking lot stored thereon, learning for the parking function can be activated through action interaction or voice interaction.

At step 102, current learning progress and a current learning result are output to the user in the learning for the parking function.

In the learning process of the parking, the current learning progress and learning result may be further provided to the user.

In an embodiment of the present invention, step 102 may include the following steps 121 to 122.

At step 121, in the learning process for the parking function, visual content containing information about a current learning node is presented on the parking function learning interface, so as to show the current learning progress to the user.

In practice, a learning process includes: path learning in which the current vehicle is not put into the reverse gear, and/or reverse learning in which the current vehicle has been put into the reverse gear. In respective learning processes, the parking function learning interface may present a visual element containing information representative of a current learning node, such as "in path learning" or "in reverse learning".

At step 122, in the learning process for the parking function, visual content containing currently learned key information is presented on the parking function learning interface, so as to show the current learning result to the user.

In practice, the visual content containing the currently learned key information may be presented in the environment simulation display on the parking function learning interface.

Specifically, accumulative traveling information collected during the travelling of the current vehicle is presented, and/or a perception enhancement element for the part of the path that has been traveled is presented.

The accumulative travelling information may include a mileage that has been traveled till present, the number of speed bumps that have been traveled till present, etc. The perception enhancement element for a path that has been traveled may include an added path guide for the part of the path that has been traveled by the current vehicle, or presentation of corresponding prompt message for that part on the parking path learning interface. For example, when the vehicle is passing a speed bump, a prompt message of "Passing a speed bump" may be displayed.

It should be noted that, step 121 and step 122 can be performed in parallel and are not order dependent.

In an embodiment of the present invention, the method further includes:
presenting, in the environment simulation display, a perception enhancement element for identifying a learning starting point, so as to show information of the learning starting point to the user.

In practice, in the learning process for the parking function, a perception enhancement element may be further added onto the environment simulation display view. It should be noted that the perception enhancement element is an element on the environment simulation display for reinforcing perception, and can be visually presented in the environment simulation display, thereby assisting the user to better perceive the environment information. The perception enhancement element is an element on the environment simulation display that does not correspond to information of actual objects. For example, the simulation element for the object is an element that corresponds to information of the actual object.

Specifically, a perception enhancement element for identifying starting point of the learning and/or a perception enhancement element for performing view blocking on an object may be presented on the environment simulation display view.

The perception enhancement element for identifying the learning starting point may be highlight or a striking color or another icon added to a simulation element indicating the starting point of the learning.

In an embodiment of the present invention, the method further includes:
presenting, in the environment simulation display, a perception enhancement element for performing view blocking on the object or objects, so as to provide the user with information indicating a relative distance from the object or objects to the current vehicle.

The perception enhancement element for performing the view blocking on the object may include a view fog. The view fog refers to a fog effect added to display of a preset area with the vehicle being the center. Objects at a short distance or objects recognized in real time are clearly displayed, while objects at a long distance or objects being recognized in real time are displayed with the fog effect added. The recognition may be enhanced as the user drives forward, and the fog effect is gradually removed from the display. This can enhance the perception of the user, so that the user is informed that the objects at a short distance have been accurately recognized and objects at a further distance are being recognized.

In an example, in a path learning scenario, the relative distance from an object in the actual environment to a current vehicle may be detected by a sensor of the current vehicle. The relative distance is compared with a preset distance. When the relative distance is greater than the preset distance, a perception enhancement element, such as the visual fog effect, may be added to an object diagram representative of the object, and the object diagram representative of the object is not displayed. When the relative distance is less than or equal to the preset distance, the fog effect can be gradually removed from the display so as to highlight the object diagram representative of the object.

In the embodiments of the present invention, in a parking process of a current vehicle from a designated location in a parking lot to a target parking space, the parking path and surrounding information acquired in the parking process are learned, and at least part of the surrounding information is presented to provide a view of surrounding environment to a user. Current learning progress and a current learning result are output to the user in the learning for the parking function. In this way, the embodiments provide presentation of environment information, learning progress, and the learning result in the learning process for the parking function, enabling the user to perceive the learning process more clearly and quickly.

Fig. 2a is a flowchart of steps of another learning method for a parking function in autonomous driving according to an embodiment of the present invention, which includes:
step 201, learning, in a parking process of a current vehicle from a designated location in a parking lot to a target parking space, a parking path and surrounding information acquired in the parking process, and presenting at least part of the surrounding information on a parking function learning interface to provide a view of surrounding environment to a user;
step 202, outputting current learning progress and a current learning result to the user in the learning for the parking function; and
step 203, when exiting the learning for the parking function, switching from the parking function learning interface to a parking interface, and pushing a voice message containing a prompt on having exited the learning for the parking function and/or presenting visual content containing a prompt on having exited the learning for the parking function, so as to provide the user with information on having exited the learning for the parking function.

In the learning process of parking, when the current vehicle exits the learning for the parking function, the interactive interface switches from the parking function learning interface to the parking interface, and a voice message containing a prompt that the current vehicle has exited the learning for the parking function is pushed, and/or a visual element containing a prompt that the current vehicle has exited the learning for the parking function is presented.

Learning of a path in VPA must be complete. It is not possible to resume and continue a learning after a vehicle exited the learning that has not been completed. This is because if the learning is allowed to be resumed, in a subsequent process of VPA, the vehicle cannot process and drive on the part of the path that has not been learned, which easily leads to a potential safety hazard and requires the user to take over the driving of the vehicle. This does not comply with an overall process of the VPA. Therefore, after exiting learning for the parking function, if the user is about to start a new learning, the learning starting point will be set as the place where the user starts the new learning.

The method further includes, after determining that the learning for the parking function exited:
setting, when a condition for re-starting learning for the parking function is not met, an interface element for starting the learning for the parking function on the parking interface to an inoperable state, so as to provide the user with information that the learning for the parking function is unavailable; or
setting, when the condition for re-starting learning for the parking function is met, the interface element for starting the learning for the parking function on the parking interface to an operable state, so as to provide the user with information that the learning for the parking function is available.

In practice, an interface element for starting learning for the parking function may be provided on the parking interface. The interface element will be in the inoperable state when the current vehicle does not meet the condition for re-starting learning for the parking function, and the interface element will be in the operable state when the current vehicle meets the condition for re-starting learning for the parking function. In this way, parking learning can be started in different manners based on the storage situation of the historically learned parking path. The manners will not be limited herein.

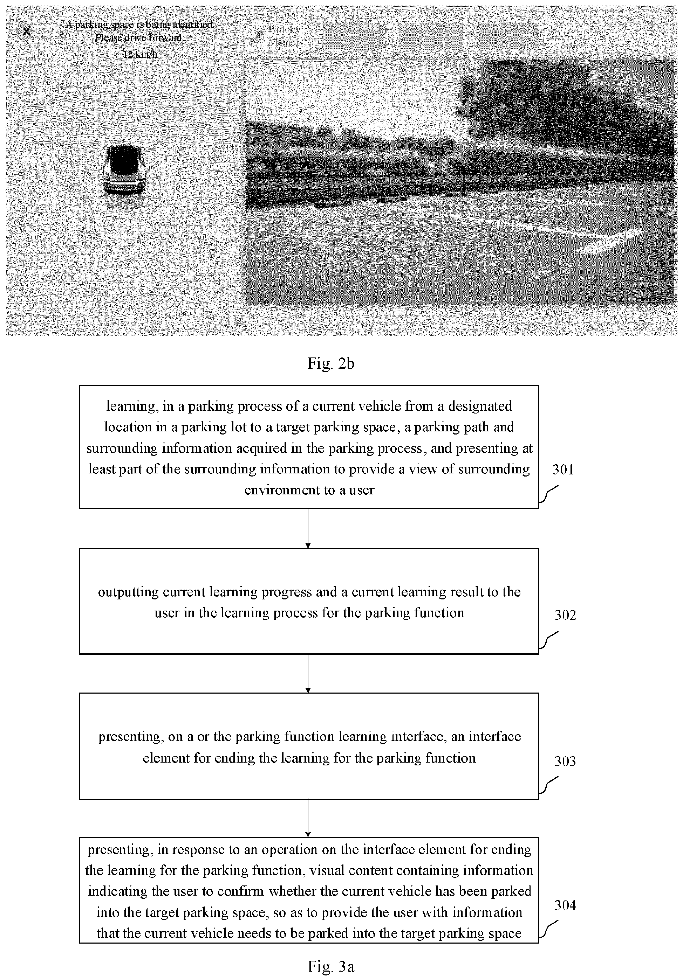

Fig. 2b shows an interactive interface. An environment simulation display view is shown on the left of Fig. 2b, which contains a simulation element for the current vehicle. A panoramic image view is shown on the right, which shows a rear view video of the vehicle. A prompt message of "A parking space is being identified. Please drive forward." and vehicle speed information of "12 km/h" are displayed on the top of the left side. An interface element of "Valet Parking Assist" is displayed on the top of the right side, and this interface element is currently dimmed and thus in the inoperable state. When a user clicks on the interface element, a voice can be played to prompt the user that the "Valet Parking Assist" function is temporarily unavailable. When the current vehicle meets the condition for re-starting the learning for the parking function, the interface element will be highlighted.

A parking process of a current vehicle from a designated location in a parking lot to a target parking space, a parking path and surrounding information acquired in the parking process are learned, and at least part of the surrounding information is presented to provide a view of surrounding environment to a user. Current learning progress and a current learning result are output to the user in the learning for the parking function. When the current vehicle exits the learning for the parking function, switching is performed from the parking function learning interface to the parking interface, and a voice message containing a prompt on having exited the learning for the parking function is pushed and/or visual content containing a prompt on having exited the learning for the parking function is presented, so as to provide the user with information that the current vehicle has exited the learning for the parking function. Therefore, the embodiments provide a feedback for the user in the event of exiting the parking function, allowing for the user to perceive the entire parking process in the learning process more clearly and quickly.

Fig. 3a is a flowchart of steps of another learning method for a parking function in autonomous driving according to an embodiment of the present invention, which may include the following steps 301 to 304.

At step 301, in a parking process of a current vehicle from a designated location in a parking lot to a target parking space, a parking path and surrounding information acquired in the parking process are learned, and at least part of the surrounding information is presented to provide a view of surrounding environment to a user.

At step 302, current learning progress and a current learning result are output to the user in the learning for the parking function.

At step 303, an interface element for ending the learning for the parking function is presented on the parking function learning interface.

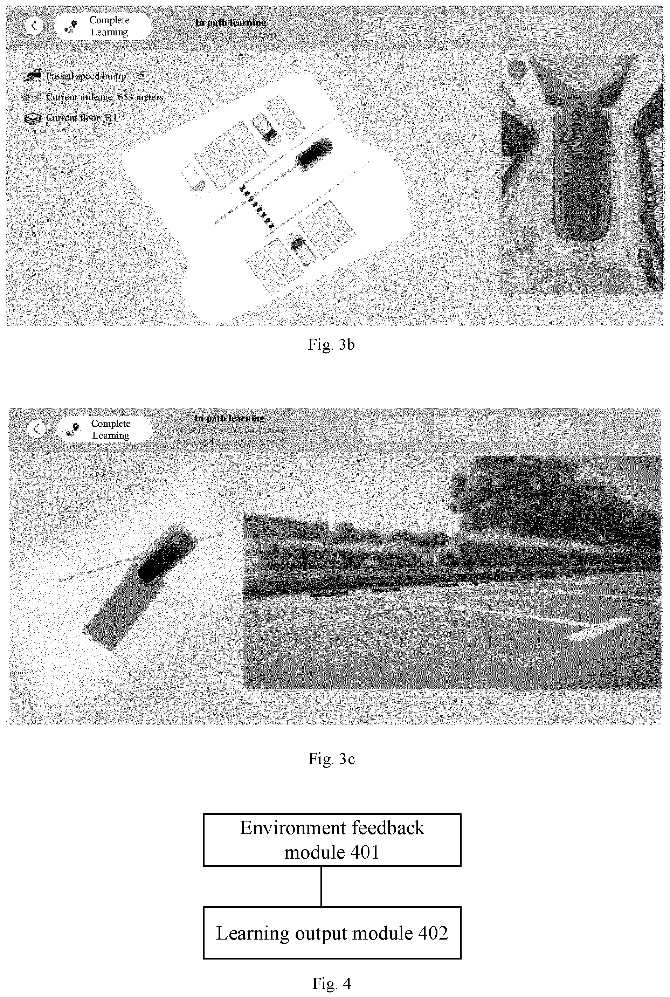

In the learning process for parking function, the user may actively exit the learning. An interface element for ending the learning for the parking function, such as a "Complete Learning" button, may be presented on the parking function learning interface, as shown in Figs. 3b-3c.

At step 304, in response to an operation on the interface element for ending learning for the parking function, visual content containing information indicating the user to confirm whether the current vehicle has been parked into the target parking space is presented, so as to provide the user with information that the current vehicle needs to be parked into the target parking space.

When the user operates on the interface element for ending the learning for the parking function, the visual element containing content requiring the user to confirm whether the current vehicle has been parked into the target parking space may be presented on the parking learning interface, so as to provide the user with information that the current vehicle needs to be parked in the target parking space before the learning for the parking function ends.

When the user clicks the button of "Complete Learning" shown in Fig. 3b and Fig. 3c, a secondary confirmation popup window may be presented for reminding the user to confirm whether the vehicle has been parked into the target parking space of the user, i.e., whether the learning is completed. It should be noted that during the presentation of the secondary popup window, if the vehicle is still driving, the learning of the path will be continued.

In an example, the user may perform a confirmation operation on the visual element that is presented on the parking function learning interface and contains content indicating the user to confirm whether the vehicle has been parked into the target parking space. After the user performs the confirmation operation, the parking path learning will be ended, and a determination is made as to whether this learning for the parking function is successful. In the case that the learning for the parking function is successful, the learned parking path will be stored.

For example, if the user performs a confirmation operation on the secondary popup window, the parking learning will be ended. If the user exits the secondary popup window without confirmation, the parking function learning will be remained and the learning will be continued.

In an example, before ending of the learning for the parking function, the method further includes:
in the case that it is detected that the current vehicle is not in a parking gear, presenting a visual element containing content indicating the user to shift to the parking gear, so as to prompt the user that the current vehicle needs to be shifted into the parking gear before ending the learning for the parking function.

In practice, before end of the learning for the parking function, it is possible to detect whether the current vehicle of the user is in the parking gear. In the event that the current vehicle is detected to be not in the parking gear, the visual element (such as a transient popup window) containing prompt content for shifting to the parking gear may be presented, so as to remind the user that the vehicle needs to be shifted into the parking gear before ending the learning for the parking function.

In the embodiments of the present invention, in a parking process of a current vehicle from a designated location in a parking lot to a target parking space, a parking path and surrounding information acquired in the parking process are learned, and at least part of the surrounding information is presented, to provide a view of surrounding environment to a user. Current learning progress and learning result are output to the user in the learning process for the parking function. An interface element for ending the learning for the parking function is presented on the parking function learning interface. In response to an operation on the interface element for ending the parking function learning, visual content containing information indicating the user to confirm whether the current vehicle has been parked into the target parking space is presented, so as to provide the user with information that the current vehicle needs to be parked into the target parking space Therefore, the user is enabled to more clearly and quickly view the learning for the parking function.

It should be noted that for ease of illustration, the method embodiments are illustrated as a series of actions/steps. However, a person skilled in the art should appreciate that the embodiments of the present invention are not limited by the described action sequence, because according to embodiments of the present invention, certain steps may be performed in other sequences or simultaneously. The person skilled in the art should also understand that the embodiments described herein are preferred embodiments, and that all of the actions involved are not necessarily required in some embodiments of the present invention.

Fig. 4 is a schematic structural diagram of a learning apparatus for a parking function in autonomous driving according to an embodiment of the present invention, which may include:
an environment feedback module 401, configured to learn, in a parking process of a current vehicle from a designated location in a parking lot to a target parking space, a parking path and surrounding information acquired in the parking process, and present at least part of the surrounding information on a parking function learning interface to provide a view of surrounding environment to a user; and
a learning feedback module 402, configured to output current learning progress and a current learning result to the user in the learning process for the parking function.

In an embodiment of the present invention, the environment feedback module 401 includes:
a first environment feedback submodule, configured to, when a fixedly-arranged object is detected, record information of the fixedly-arranged object, and present a simulation element for the fixedly-arranged object on the parking function learning interface, so as to provide a view of the fixedly-arranged object in the environment to the user;
a second environment feedback submodule, configured to, when a temporarily-arranged object is detected, record information of the temporarily-arranged object, and present a simulation element for the temporarily-arranged object on the parking function learning interface, so as to provide a view of the temporarily-arranged object in the environment to the user; and
a third environment feedback submodule, configured to, when a dynamic object is detected, present a simulation element for the dynamic object on the parking function learning interface, so as to provide a view of the dynamic object in the environment to the user, wherein no information of the dynamic object is recorded.

In an embodiment of the present invention, the learning feedback module 402 includes:
a learning progress feedback submodule, configured to present, in the learning process for the parking function, visual content containing information about a current learning node on the parking function learning interface, so as to show the current learning progress to the user; and
a learning result feedback submodule, configured to present, in the learning process for the parking function, visual content containing currently learned key information on the parking function learning interface, so as to show the current learning result to the user.

The present invention, the apparatus further includes:
an exit module, configured to switch from the parking function learning interface to a parking interface when exiting the learning for the parking function, and push a voice message containing a prompt on having exited the learning for the parking function, and/or present visual content containing a prompt on having exited the learning for the parking function learning, so as to provide the user with information on having exited the learning for the parking function.

In an embodiment of the present invention, the apparatus further includes:
a first interface element module, configured to set, when a condition for re-starting learning for the parking function is not met, an interface element for restarting the learning for the parking for the parking function is not met, an interface element for restarting the learning for the parking function on the parking interface to an inoperable state, so as to provide the user with information that the learning for the parking function is unavailable; and
a second interface element module, configured to set, when the condition for re-starting learning for the parking function is met, the interface element for restarting the parking function learning on the parking interface to an operable state, so as to provide the user with information that the learning for the parking function is available.

In an embodiment of the present invention, the apparatus further includes:
an interface element presentation module, configured to present, in the parking function learning interface, an interface element for ending the learning for the parking function; and
a visual element presentation module, configured to present, in response to an operation on the interface element for ending the learning for the parking function, visual content containing information indicating the user to confirm whether the current vehicle has been parked into the target parking space, so as to provide the user with information that the current vehicle needs to be parked into the target parking space.

In an embodiment of the present invention, the apparatus further includes:
a starting location feedback module, configured to present, in the environment simulation display, a perception enhancement element for identifying a learning starting point, so as to show information of the learning starting point to the user.

**In** an embodiment of the present invention, the apparatus further includes:
a distance information feedback module, configured to present, in the environment simulation display, a perception enhancement element for performing view blocking on an or the object or objects, so as to provide the user with information indicating a relative distance from the object or objects to the current vehicle.

In the embodiments of the present invention, in a parking process of a current vehicle from a designated location in a parking lot to a target parking space, a parking path and surrounding information acquired in the parking process are learned, and at least part of the surrounding information is presented to provide a view of surrounding environment situation to a user. Current learning progress and learning result are output to the user in the learning process for the parking function. Therefore, in the learning process for the parking function, the environment information is presented, and the learning progress and the learning result are output, enabling the user to perceive the learning process more clearly and quickly.

An embodiment of the present invention further provides a vehicle, which may include a processor, a memory and a computer program stored on the memory and executable by the processor that, when executed by the processor, implements any of the embodiments the learning method for a parking function in autonomous driving described above.

An embodiment of the present invention further provides a computer readable storage medium having stored thereon a computer program that, when executed by a processor, implements any of the embodiments of the learning method for a parking function in autonomous driving described above.

Since the apparatus embodiment is substantially similar to the method embodiment, the description is relatively simple. For relevant parts, reference may be made to the description of the method embodiment.

The embodiments in this specification are described in a progressive manner, and the description of each embodiment focuses on differences from other embodiments. Mutual reference may be made for the same and similar parts of the embodiments.

A person skilled in the art should understand that an embodiment of the present invention may be provided as a method, an apparatus, or a computer program product. Therefore, an embodiment of the present invention may be in the form of a full-hardware embodiment, a full-software embodiment, or an embodiment combining software and hardware aspects. In addition, an embodiment of the present invention may be in the form of a computer program product implemented on one or more computer usable storage media (including, but not limited to, a disk storage, a CD-ROM and an optical memory) containing computer usable program code.

Embodiments of the present invention are described with reference to flowcharts and/or block diagrams of a method, a terminal device (system), and a computer program product according to embodiments of the present invention. It should be understood that each flow and/or block in the flowcharts and/or the block diagrams, and combinations of flows and/or blocks in the flowcharts and/or the block diagrams, may be implemented by computer program instructions. These computer program instructions may be provided to a processor of a general purpose computer, a special purpose computer, an embedded processor or other programmable data processing terminal devices to produce a machine, so that the instructions executed by a processor of a computer or other programmable data processing terminal device are used to produce an apparatus for implementing functions specified in one or more flows of the flowcharts and/or one or more blocks of the block diagrams.

These computer program instructions may alternatively be stored in a computer readable memory capable of guiding a computer or other programmable data processing terminal devices to operate in a specific manner, so that the instructions stored in the computer readable memory are used to produce a product including an instruction apparatus, and the instruction apparatus implements functions specified in one or more flows of the flowcharts and/or one or more blocks of the block diagrams.

These computer program instructions may alternatively be loaded on a computer or other programmable data processing terminal devices, so that a series of operation steps are performed on the computer or other programmable terminal devices to produce computer-implemented processing, and therefore the instructions executed on the computer or other programmable terminal devices are used to provide steps for implementing functions specified in one or more flows of the flowcharts and/or one or more blocks of the block diagrams.

Although preferred embodiments among the embodiments of the present invention have been described, additional changes and modifications may be made to these embodiments by a person skilled in the art once basic inventive concepts are known. Therefore, the appended claims are intended to be construed to include the preferred embodiments as well as all changes and modifications that fall within the scope of the embodiments of the present invention.

Finally, it should be further noted that herein, relational terms such as "first" and "second" are used only to distinguish one entity or operation from another, and do not necessarily require or imply that any such actual relationship or sequence exists between these entities or operations. In addition, the term "including", "comprising" or any other variant thereof is intended to cover non-exclusive inclusion, so that a process, method, article or terminal device including a series of elements includes not only those elements, but also other elements not explicitly listed, or elements inherent to such a process, method, article or terminal device. Without further limitation, the element defined by the sentence "including a..." does not exclude that other identical elements are also present in the process, method, article or terminal device including the elements.

Detailed descriptions of the learning method and apparatus for a parking function in autonomous driving are provided above, and specific examples are applied herein to illustrate the principle and implementations of the present invention. The descriptions of the foregoing embodiments are provided only to help understand the method and core idea of the present invention. In addition, for a person of ordinary skill in the art, changes may be made to the specific implementations and application scope according to the the claims.

## Claims

1. A learning method for a parking function in autonomous driving, **characterized by**:
learning (101; 201; 301), in a parking process of a current vehicle from a designated location in a parking lot to a target parking space, a parking path and surrounding information acquired in the parking process, and presenting at least part of the surrounding information on a parking function learning interface to provide a view of surrounding environment to a user;
outputting (102; 202; 302) current learning progress and a current learning result to the user in the learning process for the parking function; and
when exiting the learning for the parking function, switching (203) from the parking function learning interface to a parking interface, and pushing a voice message containing a prompt on having exited the learning for the parking function and/or presenting visual content containing a prompt on having exited the learning for the parking function, so as to provide the user with information on having exited the learning for the parking function;
the method being **characterized by** further comprising, after determining that the learning for the parking function has exited:
setting, when a condition for re-starting learning for the parking function is not met, an interface element for starting the learning for the parking function on the parking interface to an inoperable state, so as to provide the user with information that the learning for the parking function is unavailable; or
setting, when the condition for re-starting learning for the parking function is met, the interface element for starting the learning for the parking function on the parking interface to an operable state, so as to provide the user with information that the learning for the parking function is available.

2. The method of claim 1, wherein said learning (101; 201; 301), in the parking process of the current vehicle from the designated location in the parking lot to the target parking space, the parking path and the surrounding information acquired in the parking process, and presenting at least part of the surrounding information on the parking function learning interface to provide a view of the surrounding environment to the user, comprises:
when a fixedly-arranged object is detected, recording information of the fixedly-arranged object, and presenting a simulation element for the fixedly-arranged object on the parking function learning interface, so as to provide a view of the fixedly-arranged object in the environment to the user;
when a temporarily-arranged object is detected, recording information of the temporarily-arranged object, and presenting a simulation element for the temporarily-arranged object on the parking function learning interface, so as to provide a view of the temporarily-arranged object in the environment to the user; and/or
when a dynamic object is detected, presenting a simulation element for the dynamic object on the parking function learning interface, so as to provide a view of the dynamic object in the environment to the user, wherein no information of the dynamic object is recorded.

3. The method of claim 1, wherein said outputting (102; 202; 302) the current learning progress and the current learning result to the user in the learning process for the parking function, comprises:
presenting, in the learning process for the parking function, visual content containing information about a current learning node on the parking function learning interface, so as to show the current learning progress to the user; and
presenting, in the learning process for the parking function, visual content containing currently learned key information on the parking function learning interface, so as to show the current learning result to the user.

4. The method of any of claims 1-3, further comprising:
presenting (303), on the parking function learning interface, an interface element for ending the learning for the parking function; and
presenting (304), in response to an operation on the interface element for ending the learning for the parking function, visual content containing information indicating the user to confirm whether the current vehicle has been parked into the target parking space, so as to provide the user with information that the current vehicle needs to be parked into the target parking space.

5. The method of any of claims 1-3, further comprising:
presenting, on the parking function learning interface, a perception enhancement element for identifying a learning starting point, so as to show information of the learning starting point to the user.

6. The method of any of claims 1-3, further comprising:
presenting, on the parking function learning interface, a perception enhancement element for performing view blocking on an or the object or objects, so as to provide the user with information indicating a relative distance from the object or objects to the current vehicle.

7. A learning apparatus for a parking function in autonomous driving, comprising:
an environment feedback module (401), configured to learn, in a parking process of a current vehicle from a designated location in a parking lot to a target parking space, a parking path and surrounding information acquired in the parking process, and present at least part of the surrounding information on a parking function learning interface to provide a view of surrounding environment to a user;
a learning output module (402), configured to output current learning progress and a current learning result to the user in the learning process for the parking function; and
an exit module, configured to switch from the parking function learning interface to a parking interface when exiting the learning for the parking function, and push a voice message containing a prompt on having exited the learning for the parking function, and/or present visual content containing a prompt on having exited the learning for the parking function learning, so as to provide the user with information on having exited the learning for the parking function;
the method being **characterized by** further comprising:
a first interface element module, configured to set, when a condition for re-starting learning for the parking function is not met, an interface element for restarting the learning for the parking function on the parking interface to an inoperable state, so as to provide the user with information that the learning for the parking function is unavailable; and
a second interface element module, configured to set, when the condition for re-starting learning for the parking function is met, the interface element for restarting the parking function learning on the parking interface to an operable state, so as to provide the user with information that the learning for the parking function is available.

8. A vehicle, **characterized by**:
a processor,
a memory, and
a computer program stored on the memory and executable by the processor that, when executed by the processor, implements the learning method for a parking function in autonomous driving of any of claims 1-6.

9. A computer readable storage medium having stored thereon a computer program that, when executed by a processor, implements the learning method for a parking function in autonomous driving of any of claims 1-6.

## Patentansprüche

1. Lernverfahren für eine Einparkfunktion beim autonomen Fahren, **gekennzeichnet durch**:
Lernen (101; 201; 301), bei einem Prozess des Einparkens eines aktuellen Fahrzeugs von einem festgelegten Ort auf einem Parkplatz in einen Zielparkbereich, einer Einparkbahn und von Umgebungsinformationen, die bei dem Prozess des Einparkens erfasst werden, und Präsentieren mindestens eines Teils der Umgebungsinformationen auf einer Einparkfunktionslernschnittstelle, um einem Benutzer eine Ansicht der umliegenden Umgebung bereitzustellen;
Ausgeben (102; 202; 302) eines aktuellen Lernfortschritts und eines aktuellen Lernergebnisses an den Benutzer bei dem Lernprozess für die Einparkfunktion; und
bei einem Aussprung aus dem Lernen für die Einparkfunktion Umschalten (203) von der Einparkfunktionslernschnittstelle zu einer Einparkschnittstelle und Übertragen einer Sprachnachricht, die eine Aufforderung zum erfolgten Aussprung aus dem Lernen für die Einparkfunktion enthält, im Push-Verfahren und/oder Präsentieren eines visuellen Inhalts, der eine Aufforderung zum erfolgten Aussprung aus dem Lernen für die Einparkfunktion enthält, um dem Benutzer Informationen zum erfolgten Aussprung aus dem Lernen für die Einparkfunktion bereitzustellen;
wobei das Verfahren **dadurch** gekennzeichnet ist, dass es nach dem Bestimmen, dass ein Aussprung aus dem Lernen für die Einparkfunktion erfolgt ist, ferner Folgendes umfasst:
Einstellen, wenn eine Bedingung für das erneute Starten des Lernens für die Einparkfunktion nicht erfüllt wird, eines Schnittstellenelements zum Starten des Lernens für die Einparkfunktion auf der Einparkschnittstelle in einen nicht betriebsbereiten Zustand, um dem Benutzer Informationen dazu bereitzustellen, dass das Lernen für die Einparkfunktion nicht verfügbar ist; oder
Einstellen, wenn die Bedingung für das erneute Starten des Lernens für die Einparkfunktion erfüllt wird, des Schnittstellenelements zum Starten des Lernens für die Einparkfunktion auf der Einparkschnittstelle in einen betriebsbereiten Zustand, um dem Benutzer Informationen dazu bereitzustellen, dass das Lernen für die Einparkfunktion verfügbar ist.

2. Verfahren nach Anspruch 1, wobei das Lernen (101; 201; 301), bei dem Prozess des Einparkens des aktuellen Fahrzeugs von dem festgelegten Ort auf dem Parkplatz in den Zielparkbereich, der Einparkbahn und der Umgebungsinformationen, die bei dem Prozess des Einparkens erfasst werden, und das Präsentieren mindestens eines Teils der Umgebungsinformationen auf der Einparkfunktionslernschnittstelle, um dem Benutzer eine Ansicht der umliegenden Umgebung bereitzustellen, Folgendes umfassen:
wenn ein fest angeordnetes Objekt detektiert wird, Aufzeichnen von Informationen des fest angeordneten Objekts und Präsentieren eines Simulationselements für das fest angeordnete Objekt auf der Einparkfunktionslernschnittstelle, um dem Benutzer eine Ansicht des fest angeordneten Objekts in der Umgebung bereitzustellen;
wenn ein vorübergehend angeordnetes Objekt detektiert wird, Aufzeichnen von Informationen des vorübergehend angeordneten Objekts und Präsentieren eines Simulationselements für das vorübergehend angeordnete Objekt auf der Einparkfunktionslernschnittstelle, um dem Benutzer eine Ansicht des vorübergehend angeordneten Objekts in der Umgebung bereitzustellen; und/oder,
wenn ein dynamisches Objekt detektiert wird, Präsentieren eines Simulationselements für das dynamische Objekt auf der Einparkfunktionslernschnittstelle, um dem Benutzer eine Ansicht des dynamischen Objekts in der Umgebung bereitzustellen, wobei keine Informationen des dynamischen Objekts aufgezeichnet werden.

3. Verfahren nach Anspruch 1, wobei das Ausgeben (102; 202; 302) des aktuellen Lernfortschritts und des aktuellen Lernergebnisses an den Benutzer bei dem Lernprozess für die Einparkfunktion Folgendes umfasst:
Präsentieren, bei dem Lernprozess für die Einparkfunktion, eines visuellen Inhalts, der Informationen zu einem aktuellen Lernknoten enthält, auf der Einparkfunktionslernschnittstelle, um dem Benutzer den aktuellen Lernfortschritt zu zeigen; und
Präsentieren, bei dem Lernprozess für die Einparkfunktion, eines visuellen Inhalts, der aktuell gelernte Schlüsselinformationen enthält, auf der Einparkfunktionslernschnittstelle, um dem Benutzer das aktuelle Lernergebnis zu zeigen.

4. Verfahren nach einem der Ansprüche 1-3, das ferner Folgendes umfasst:
Präsentieren (303), auf der Einparkfunktionslernschnittstelle, eines Schnittstellenelements zum Beenden des Lernens für die Einparkfunktion; und
Präsentieren (304), als Reaktion auf einen Vorgang an dem Schnittstellenelement zum Beenden des Lernens für die Einparkfunktion, eines visuellen Inhalts, der Informationen enthält, die anzeigen, dass der Benutzer bestätigen soll, ob das aktuelle Fahrzeug in den Zielparkbereich eingeparkt worden ist, um dem Benutzer Informationen dazu bereitzustellen, dass das aktuelle Fahrzeug in den Zielparkbereich einzuparken ist.

5. Verfahren nach einem der Ansprüche 1-3, das ferner Folgendes umfasst:
Präsentieren, auf der Einparkfunktionslernschnittstelle, eines Wahrnehmungsverbesserungselements zum Identifizieren eines Lernstartpunkts, um dem Benutzer Informationen des Lernstartpunkts zu zeigen.

6. Verfahren nach einem der Ansprüche 1-3, das ferner Folgendes umfasst:
Präsentieren, auf der Einparkfunktionslernschnittstelle, eines Wahrnehmungsverbesserungselements zum Durchführen einer Sichtversperrung an einem Objekt oder Objekten oder dem Objekt oder den Objekten, um dem Benutzer Informationen bereitzustellen, die einen relativen Abstand von dem Objekt oder den Objekten zu dem aktuellen Fahrzeug anzeigen.

7. Lernvorrichtung für eine Einparkfunktion beim autonomen Fahren, die Folgendes umfasst:
ein Umgebungsrückmeldungsmodul (401), das konfiguriert ist, um bei einem Prozess des Einparkens eines aktuellen Fahrzeugs von einem festgelegten Ort auf einem Parkplatz in einem Zielparkbereich eine Einparkbahn und Umgebungsinformationen, die bei dem Prozess des Einparkens erfasst werden, zu lernen und mindestens einen Teil der Umgebungsinformationen auf einer Einparkfunktionslernschnittstelle zu präsentieren, um einem Benutzer eine Ansicht der umliegenden Umgebung bereitzustellen;
ein Lernausgabemodul (402), das konfiguriert ist, um einen aktuellen Lernfortschritt und ein aktuelles Lernergebnis an den Benutzer bei dem Lernprozess für die Einparkfunktion auszugeben; und
ein Aussprungmodul, das konfiguriert ist, um bei einem Aussprung aus dem Lernen für die Einparkfunktion von der Einparkfunktionslernschnittstelle zu einer Einparkschnittstelle umzuschalten und eine Sprachnachricht, die eine Aufforderung zum erfolgten Aussprung aus dem Lernen für die Einparkfunktion enthält, im Push-Verfahren zu übertragen und/oder einen visuellen Inhalt, der eine Aufforderung zum erfolgten Aussprung aus dem Lernen für das Einparkfunktionslernen enthält, zu präsentieren, um dem Benutzer Informationen zum erfolgten Aussprung aus dem Lernen für die Einparkfunktion bereitzustellen;
wobei das Verfahren **dadurch gekennzeichnet ist, dass** es ferner Folgendes umfasst:
ein erstes Schnittstellenelementmodul, das konfiguriert ist, um, wenn eine Bedingung für das erneute Starten des Lernens für die Einparkfunktion nicht erfüllt wird, ein Schnittstellenelement für das erneute Starten des Lernens für die Einparkfunktion auf der Einparkschnittstelle in einen nicht betriebsbereiten Zustand einzustellen, um dem Benutzer Informationen dazu bereitzustellen, dass das Lernen für die Einparkfunktion nicht verfügbar ist; und
ein zweites Schnittstellenelementmodul, das konfiguriert ist, um, wenn die Bedingung für das erneute Starten des Lernens für die Einparkfunktion erfüllt wird, das Schnittstellenelement für das erneute Starten des Einparkfunktionslernens auf der Einparkschnittstelle in einen betriebsbereiten Zustand einzustellen, um dem Benutzer Informationen dazu bereitzustellen, dass das Lernen für die Einparkfunktion verfügbar ist.

8. Fahrzeug, **gekennzeichnet durch**:
einen Prozessor,
einen Speicher und
ein in dem Speicher gespeichertes und **durch** den Prozessor ausführbares Computerprogramm, das, wenn es **durch** den Prozessor ausgeführt wird, das Lernverfahren für eine Einparkfunktion beim autonomen Fahren nach einem der Ansprüche 1-6 implementiert.

9. Computerlesbares Speichermedium, in dem ein Computerprogramm gespeichert ist, das, wenn es durch einen Prozessor ausgeführt wird, das Lernverfahren für eine Einparkfunktion beim autonomen Fahren nach einem der Ansprüche 1-6 implementiert.

## Revendications

1. Procédé d'apprentissage pour une fonction de stationnement en conduite autonome, **caractérisé par** les étapes consistant à :
apprendre (101 ; 201 ; 301), au cours d'un processus de stationnement d'un véhicule actuel depuis un emplacement désigné dans un parking jusqu'à une place de stationnement cible, une trajectoire de stationnement et des informations environnantes acquises au cours du processus de stationnement, et présenter au moins une partie des informations environnantes sur une interface d'apprentissage de fonction de stationnement afin de fournir une vue d'un environnement proche à un utilisateur ;
délivrer en sortie (102 ; 202 ; 302) une progression actuelle d'apprentissage et un résultat actuel d'apprentissage à l'utilisateur au cours du processus d'apprentissage pour la fonction de stationnement ; et
lors de la sortie de l'apprentissage pour la fonction de stationnement, passer (203) de l'interface d'apprentissage de fonction de stationnement à une interface de stationnement, et diffuser un message vocal contenant une indication sur la sortie de l'apprentissage pour la fonction de stationnement et/ou présenter un contenu visuel contenant une indication sur la sortie de l'apprentissage pour la fonction de stationnement, de manière à fournir à l'utilisateur des informations sur la sortie de l'apprentissage pour la fonction de stationnement ;
le procédé étant **caractérisé en ce qu'**il comprend en outre, après avoir déterminé la sortie de l'apprentissage pour la fonction de stationnement, l'étape consistant à :
lorsqu'une condition de redémarrage de l'apprentissage pour la fonction de stationnement n'est pas satisfaite, régler dans un état non fonctionnel un élément d'interface de démarrage de l'apprentissage pour la fonction de stationnement sur l'interface de stationnement, de manière à fournir à l'utilisateur des informations indiquant que l'apprentissage pour la fonction de stationnement n'est pas disponible ; ou
lorsque la condition de redémarrage de l'apprentissage pour la fonction de stationnement est satisfaite, régler dans un état fonctionnel l'élément d'interface de démarrage de l'apprentissage pour la fonction de stationnement sur l'interface de stationnement, de manière à fournir à l'utilisateur des informations indiquant que l'apprentissage pour la fonction de stationnement est disponible.

2. Procédé selon la revendication 1, dans lequel ledit apprentissage (101 ; 201 ; 301), au cours du processus de stationnement du véhicule actuel depuis l'emplacement désigné dans le parking jusqu'à la place de stationnement cible, de la trajectoire de stationnement et des informations environnantes acquises au cours du processus de stationnement, et ladite présentation d'au moins une partie des informations environnantes sur l'interface d'apprentissage de fonction de stationnement afin de fournir une vue de l'environnement proche à l'utilisateur comprennent les étapes consistant à :
lorsqu'un objet agencé fixe est détecté, enregistrer des informations de l'objet agencé fixe et présenter un élément de simulation pour l'objet agencé fixe sur l'interface d'apprentissage de fonction de stationnement, de manière à fournir à l'utilisateur une vue de l'objet agencé fixe dans l'environnement ;
lorsqu'un objet agencé temporairement est détecté, enregistrer des informations de l'objet agencé temporairement et présenter un élément de simulation pour l'objet agencé temporairement sur l'interface d'apprentissage de fonction de stationnement, de manière à fournir à l'utilisateur une vue de l'objet agencé temporairement dans l'environnement ; et/ou
lorsqu'un objet dynamique est détecté, présenter un élément de simulation pour l'objet dynamique sur l'interface d'apprentissage de fonction de stationnement, de manière à fournir à l'utilisateur une vue de l'objet dynamique dans l'environnement, aucune information de l'objet dynamique n'étant enregistrée.

3. Procédé selon la revendication 1, dans lequel ladite délivrance en sortie (102 ; 202 ; 302) de la progression actuelle d'apprentissage et du résultat actuel d'apprentissage à l'utilisateur au cours du processus d'apprentissage pour la fonction de stationnement comprend les étapes consistant à :
présenter, au cours du processus d'apprentissage pour la fonction de stationnement, un contenu visuel contenant des informations sur un nœud actuel d'apprentissage sur l'interface d'apprentissage de fonction de stationnement, de manière à montrer à l'utilisateur la progression actuelle d'apprentissage ; et
présenter, au cours du processus d'apprentissage pour la fonction de stationnement, un contenu visuel contenant des informations clés actuellement apprises sur l'interface d'apprentissage de fonction de stationnement, de manière à montrer à l'utilisateur le résultat actuel d'apprentissage.

4. Procédé selon l'une quelconque des revendications 1 à 3, comprenant en outre les étapes consistant à :
présenter (303), sur l'interface d'apprentissage de fonction de stationnement, un élément d'interface permettant de mettre fin à l'apprentissage pour la fonction de stationnement ; et
présenter (304), en réponse à une opération sur l'élément d'interface pour mettre fin à l'apprentissage pour la fonction de stationnement, un contenu visuel contenant des informations indiquant à l'utilisateur de confirmer si le véhicule actuel a été garé sur la place de stationnement cible, de manière à fournir à l'utilisateur des informations indiquant que le véhicule actuel doit être garé sur la place de stationnement cible.

5. Procédé selon l'une quelconque des revendications 1 à 3, comprenant en outre l'étape consistant à :
présenter, sur l'interface d'apprentissage de fonction de stationnement, un élément d'amélioration de perception permettant d'identifier un point de départ d'apprentissage, de manière à montrer à l'utilisateur des informations du point de départ d'apprentissage.

6. Procédé selon l'une quelconque des revendications 1 à 3, comprenant en outre l'étape consistant à :
présenter, sur l'interface d'apprentissage de fonction de stationnement, un élément d'amélioration de perception permettant de réaliser un blocage de vue sur un objet ou sur le ou les objets, de manière à fournir à l'utilisateur des informations indiquant une distance relative entre le ou les objets et le véhicule actuel.

7. Appareil d'apprentissage pour une fonction de stationnement en conduite autonome, comprenant :
un module de retour d'environnement (401), configuré pour apprendre, au cours d'un processus de stationnement d'un véhicule actuel depuis un emplacement désigné dans un parking jusqu'à une place de stationnement cible, une trajectoire de stationnement et des informations environnantes acquises au cours du processus de stationnement, et présenter au moins une partie des informations environnantes sur une interface d'apprentissage de fonction de stationnement afin de fournir une vue d'un environnement proche à un utilisateur ;
un module de sortie d'apprentissage (402), configuré pour délivrer en sortie une progression actuelle d'apprentissage et un résultat actuel d'apprentissage à l'utilisateur au cours du processus d'apprentissage pour la fonction de stationnement ; et
un module de sortie, configuré pour passer de l'interface d'apprentissage de fonction de stationnement à une interface de stationnement lors de la sortie de l'apprentissage pour la fonction de stationnement, et diffuser un message vocal contenant une indication sur la sortie de l'apprentissage pour la fonction de stationnement, et/ou présenter un contenu visuel contenant une indication sur la sortie de l'apprentissage pour l'apprentissage de fonction de stationnement, de manière à fournir à l'utilisateur des informations sur la sortie de l'apprentissage pour la fonction de stationnement ;
le procédé étant **caractérisé en ce qu'**il comprend en outre :
un premier module d'élément d'interface, configuré pour régler dans un état non fonctionnel, lorsqu'une condition de redémarrage de l'apprentissage pour la fonction de stationnement n'est pas satisfaite, un élément d'interface de redémarrage de l'apprentissage pour la fonction de stationnement sur l'interface de stationnement, de manière à fournir à l'utilisateur des informations indiquant que l'apprentissage pour la fonction de stationnement n'est pas disponible ; et
un second module d'élément d'interface, configuré pour régler dans un état fonctionnel, lorsque la condition de redémarrage de l'apprentissage pour la fonction de stationnement est satisfaite, l'élément d'interface de redémarrage de l'apprentissage de fonction de stationnement sur l'interface de stationnement, de manière à fournir à l'utilisateur des informations indiquant que l'apprentissage pour la fonction de stationnement est disponible.

8. Véhicule, **caractérisé par** :
un processeur,
une mémoire, et
un programme informatique stocké dans la mémoire et exécutable par le processeur qui, lorsqu'il est exécuté par le processeur, met en œuvre le procédé d'apprentissage pour une fonction de stationnement en conduite autonome selon l'une quelconque des revendications 1 à 6.

9. Support de stockage lisible par ordinateur sur lequel est stocké un programme informatique qui, lorsqu'il est exécuté par un processeur, met en œuvre le procédé d'apprentissage pour une fonction de stationnement en conduite autonome selon l'une quelconque des revendications 1 à 6.
